# EUROPEAN PATENT APPLICATION

(11) **EP 3 632 630 A1**
(43) Date of publication of application: **08.04.2020**
(21) Application number: 19201261.5
(22) Date of filing: 03.10.2019
(51) Int. Cl.: B25J 9/02, B25J 9/04, B65G 1/137, G07F 11/16, G07F 17/00

(54) **DISPLACEMENT ROBOT**

(30) Priority: 05.10.2018 NL 1043027
(71) Applicant: Brown Automation B.V., 4175 LM Haaften (NL)
(72) Inventor: de Bruin, Jan Willem, 4181 CK Waardenburg (NL)
(74) Representative: van Dokkum, Willem Gerard Theodoor

(57) **Abstract**

Device (1) for displacing an object in the x, y and z direction (2, 3, 4) by means of drive means (7, 13, 15, 17). The device comprises a base frame (5) and a pivot member (6) which is rotatable (9) relative to the base frame about a vertical pivot axis (8) and which is connected to a first displacement member (10) which is connected to a second displacement member (11) which is connected to a coupling member (12) for temporarily connecting the object to be displaced. The first displacement member is adapted to be able to displace the second displacement member along a vertical displacement axis (14) and to also be able to rotate (16) the second displacement member. The second displacement member is adapted to be able to displace the coupling member along a horizontal displacement axis (18). A balance member (21) is also rotatable about the vertical pivot axis.

## Description

The invention relates to a device for displacing an object temporarily connected thereto in x, y and z direction by means of drive means.

### Related art

Such a device, provided with the necessary (computer) control, can be considered as a "displacement robot". In particular, pharmacy is envisaged for the use of the present "robot" device. Different types are eligible for this purpose, such as shaft robots (see for example https://www.youtube.com/watch?v=rlY-ffeWGO0) or robots based on linear movements (see for example https://www.youtube.com/watch?v=VCNCsXLwEkA). These systems each have their disadvantages such as being too laborious or very expensive.

Another kind of robot is the so-called "Scara robot" (see for example http://softmc.servotronix.com/wiki/SCARA_robot).
This robot has some disadvantages:
- weight: for this system to work stably and precisely, a very sturdy and therefore heavy construction is required (a small scara robot can easily weigh 20 kg).
- for the intended application in pharmacy, this robot must be able to move the relevant objects vertically for at least 2 meters. However, such robots of the Scara robot type do not exist and adaptation of this type of Scara robot encounters various insurmountable drawbacks, in particular with regard to the weight of the frame that would be required, as well as with regard to balancing and the (very complex) control.

### Disclosure of the invention

The object of the present invention is to provide a device, which can be used as a "displacement robot", in particular (but not exclusively) for use in pharmacy, and which is able to vertically displace objects over a substantial height of, for example, about 2 meters, with the following benefits/advantages being achieved:
- Minimum imbalance
- Lightweight construction
- Large working area in z direction possible
- Relatively simple controls
- More than 360° mechanical freedom

According to the invention, a device is provided for displacing an object temporarily connected thereto in x, y and z direction by means of drive means,
wherein the device comprises a base frame and a pivot member, which pivot member is rotatable relative to the base frame about a vertical pivot axis by means of first drive means and, which pivot member is connected with a first displacement member, the first displacement member being connected to a second displacement member, the second displacement member being connected to a coupling member, which coupling member is adapted for temporarily connecting and/or engaging the object to be displaced,
wherein the first displacement member is adapted to be able to displace the second displacement member along a vertical displacement axis by means of second drive means and, furthermore, the first displacement member is adapted to be able to rotate the second displacement member, independent of its vertical position, around the vertical displacement axis, by means of third drive means,
wherein the second displacement member is adapted to be able to displace the coupling member along a horizontal displacement axis by means of fourth drive means.

In order to improve the stability and accuracy of the device during use, the pivot member is preferably connected to a balancing member which, relative to the vertical pivot axis opposite the pivot member, is also rotatable about the vertical pivot axis.

The invention will now be further discussed with reference to the figure description below.

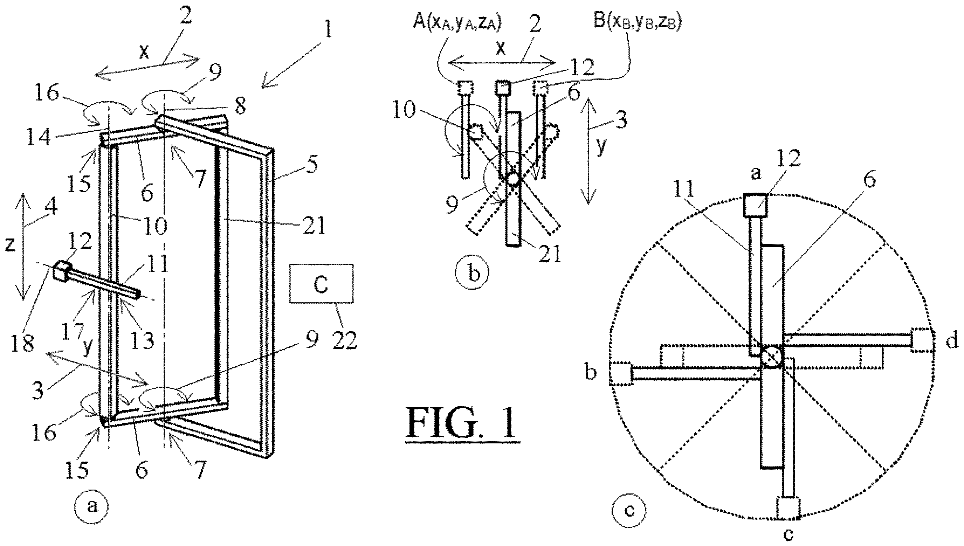

Figure 1 shows schematically an exemplary embodiment of a device according to the invention.

Figure 1 shows schematically an exemplary embodiment of a device 1 for displacing an object (not shown), which is temporarily connected to the device, in the x, y and z direction (see arrows 2, 3, 4 respectively) by means of drive means.

The device 1 comprises a base frame 5 and a pivot member 6 which, firstly, is rotatable (see arrows 9) relative to the base frame 5 around a vertical pivot axis 8 by means of first drive means 7, and which, secondly, is connected (at its free end) with a first displacement member 10, which itself is connected to a second displacement member 11, which itself is connected to a coupling member 12, which is adapted for temporarily connecting and/or engaging the object (not shown) to be displaced.

The first displacement member 10 is adapted to be able to displace the second displacement member 11 along a vertical displacement axis 14 by means of second drive means 13. Furthermore, the first displacement member is adapted to be able to rotate (see arrows 16) the second displacement member 11, irrespective of its vertical position, around said vertical displacement axis 14, by means of third drive means 15.

The second displacement member 11 is adapted to be able to displace the coupling member 12 along a horizontal displacement axis 18 by means of fourth drive means 17.

The drive means 7, 13, 15 and 17, and the coupling member 12 are controlled from a control module 22, which ensures that the object to be displaced is temporarily connected to the device 1 at a first location A (x_{A}, y_{A}, z_{A}) and is displaced to a second location B (x_{B}, y_{B}, z_{B}), as schematically illustrated in Figure 1b.

The pivot member 6 is connected to a balancing member 21 which, relative to the vertical pivot axis 8 opposite the pivot member 6, is also rotatable about the vertical pivot axis 8. The balancing member 21 forms (literally) a counterbalance against (the total weight of) the pivot member 6, the displacement members 10 and 11 connected thereto, the coupling member 12 and the object to be displaced, which benefits the stability and accuracy of the device.

Therefore, the present invention provides for a device, which can be used as a "displacement robot", in particular (but not exclusively) for use in pharmacy. The device is able to vertically move and displace said objects over a substantial height of, for example, about 2 meters, whereby the following advantages are achieved:
- Minimum imbalance
- Lightweight construction
- Large working area in z direction possible
- Relatively simple control by means of control module 22
- More than 360° mechanical freedom (schematically illustrated in Figure 1c).

With regard to the contents of earlier patents cited in the Dutch Search Report, the following can be noted. The publications found in the Search Report all relate to robots that are intended for the manipulation and/or processing of relatively heavy metal parts for machine building or the car industry. The robot manipulators described are therefore very heavy-duty. For example, DE3627560A (AUDI GmbH), which is explicitly cited in the Search Report, shows such a manipulator for grinding steel machine parts. Although the configuration is in theory comparable to that of the manipulator according to the invention, it is immediately evident that the configuration known from DE3627560A is for a substantial part formed by a heavy industrial robot (7) having within itself already a large number of degrees of freedom in its manipulation possibilities. As a kind of accessory, a manipulation mechanism has been added as a result of which the complete system, as a whole, is theoretically comparable to the system according to the invention, although it must be admitted that - as also appears from the Search Report - the comparison of both configurations with each other is rather artificial and far-fetched. The present invention has the objective, as clearly indicated in the foregoing, to provide a simple robot manipulator for use in pharmacy (pharmacies, etc.) in which the robot can move the relevant (lightweight) objects (boxes of medicines) vertically at least 2 meters, i.e. a lightweight, simple manipulator that must be able to move lightweight objects such as medicine boxes etc. over a relatively large distance. None of the publications mentioned in the Search Report shows such a "lean & mean" manipulator for such a field of application.

## Claims

1. Device (1) for displacing an object temporarily connected thereto in x, y and z direction (2, 3, 4) by means of drive means,
the device comprising a base frame (5) and a pivot member (6), which pivot member is rotatable (9) relative to the base frame around a vertical pivot axis (8) by means of first drive means (7) and, which pivot member is connected with a first displacement member (10), the first displacement member being connected to a second displacement member (11), the second displacement member being connected to a coupling member (12), which coupling member is adapted for temporarily connecting and/or engaging the object to be displaced,
wherein the first displacement member is adapted to be able to displace the second displacement member along a vertical displacement axis (14) by means of second drive means (13) and, furthermore, the first displacement member is adapted to be able to rotate (16) the second displacement member, independent of its vertical position, around the vertical displacement axis, by means of third drive means (15),
wherein the second displacement member is adapted to be able to displace the coupling member along a horizontal displacement axis (18) by means of a fourth drive means (17).

2. Device according to claim 1, wherein the pivot member is connected to a balancing member (21) which, relative to the vertical pivot axis opposite the pivot member, is also rotatable around the vertical pivot axis.
